# FASCICULE DE BREVET EUROPEEN

(11) **EP 1 374 588 B1**
(45) Date de publication et mention de la délivrance du brevet: **31.08.2005**
(21) Numéro de dépôt: 02700520.6
(22) Date de dépôt: 25.02.2002
(51) Int. Cl.: H04N 7/167

(54) **ENCRYPTION D'UN FLUX VIDEO COMPRESSE**
VERSCHLÜSSELUNG EINES KOMPRIMIERTEN VIDEOSTROMES
ENCRYPTION OF A COMPRESSED VIDEO STREAM

(30) Priorité: 26.02.2001 CH 344012001
(43) Date de publication de la demande: 02.01.2004
(73) Titulaire: Nagravision SA, 1033 Cheseaux-sur-Lausanne (CH)
(72) Inventeur: CHAUBERT, Eric, CH-1196 Gland (CH)
(74) Mandataire: Wenger, Joel-Théophile
(86) Numéro de dépôt international: PCT/IB2002/000557
(87) Numéro de publication internationale: WO 2002/069638

(56) Documents cités:
- EP-A- 0 984 630
- US-A- 5 838 791

## Description

La présente invention concerne une méthode visant encrypter un flux vidéo compressé, en particulier en permettant de renforcer le niveau de sécurité tout en ne pénalisant pas les ressources lors du décryptage.

Les algorithmes de compression vidéo sont basés sur le fait que généralement, les différences entre une image et sa suivante sont faibles et que l'expression des différences représente une quantité d'information bien plus réduite que l'image entière. Il a été observé que, d'une image à l'autre, un grand nombre d'informations ne changent pas, voire se retrouvent dans un plan légèrement différent.

Ce principe est appliqué dans des formats de type MPEG-2, MPEG-3, ou Quick Time.

Selon ces algorithmes, une première image, dite de référence est transmise au complet et une analyse des images suivantes est effectuée afin de déterminer et transmettre les différences. Selon la norme MPEG, on distingue les trames transmises intégralement (I-Frame) et les données différentielles de type MV (vecteur de déplacement) et de type DFD (différence entre le modèle MV et l'image réelle).

Selon les solutions connues, ces données sont ensuite encryptées selon un algorithme adapté au niveau de sécurité souhaité.

Afin de conserver une compatibilité lors de la transmission et du traitement, chaque ensemble est encrypté pour lui-même c'est-à-dire que l'attribut des trames demeure visible, seul le contenu est encrypté.

Avec l'évolution des moyens de stockage, il est courant de transmettre des données encryptées, représentant par exemple un film, vers l'unité d'un utilisateur.

Une fois le fichier stocké dans l'unité, un tiers peut avoir tout le temps nécessaire pour essayer de décrypter les données.

Afin de pallier ce risque, une première approche consiste à augmenter le niveau de sécurité sur le fichier, c'est-à-dire, d'utiliser des algorithmes puissants à clés longues.

Cette technique, bien que satisfaisante sur le plan de la sécurité, présente l'inconvénient d'imposer des ressources importantes à l'unité de décryptage.

La diversification des moyens de visualisation va dans le sens de l'utilisation des données par des unités disposant de faibles capacités cryptographiques. Ceci est le cas par exemple pour les nouveaux téléphones portables disposant d'un écran de visualisation. Pour ce type d'unité, l'utilisation en temps réel d'algorithmes sophistiqués n'est pas possible sans dégradation des performances de l'unité.

Ainsi, l'utilisation de blocs de données encryptés par des algorithmes puissants est incompatible avec une utilisation à destination de tous type d'unité d'utilisateurs.

Le but de la présente demande est donc de réconcilier l'utilisation d'algorithmes puissants avec des terminaux disposant de faibles capacités cryptographiques.

Ce but est atteint par une méthode d'encryption d'un flux vidéo compressé, comprenant des blocs de données indépendantes et des blocs de données différentielles consistant à encrypter par un premier niveau d'encryption les blocs de données indépendantes et par un second niveau d'encryption les blocs de données différentielles, chacun de ces glocs étant traités indépendamment.

Par bloc de données indépendantes, on entend des informations permettant d'obtenir le signal décompressé sans référence aux informations précédentes. Il peut s'agir par exemple des trames complètes (I-Frame).

Par bloc de données différentielles, on entend des informations permettant d'obtenir le signal décompressé par modification du signal précédent en appliquant ces informations différentielles.

En effet, cette solution permet de concentrer la sécurité maximale sur les informations indispensables à la décompression des images. Selon cette méthode, un premier algorithme est appliqué sur les trames complètes (I-Frame) du signal vidéo compressé et un second algorithme est appliqué aux informations différentielles de type MV et de type DFD.

Cette différence peut se faire également par l'utilisation de clés de longueur variable selon le type de données. Ainsi, les trames complètes seront encryptées par une clé de 2048 bits alors que les informations différentielles seront encryptées par une clé de 128 bits.

Selon une variante de l'invention, les informations différentielles ne sont pas encryptées.

Il est à noter que d'autres sources d'informations fonctionnant sur le principe différentiel, peuvent également utiliser cette méthode. C'est le cas par exemple pour la musique compressée selon le format MP3.

La présente invention sera mieux comprise à la lumière des dessins annexés, pris à titre non limitatifs, dans lesquels:
- la figure 1 illustre le flux compressé avant l'opération d'encryptage,
- la figure 2 représente le flux compressé sous forme encryptée,
- la figure 3 représente un flux compressé lors de sa transmission.

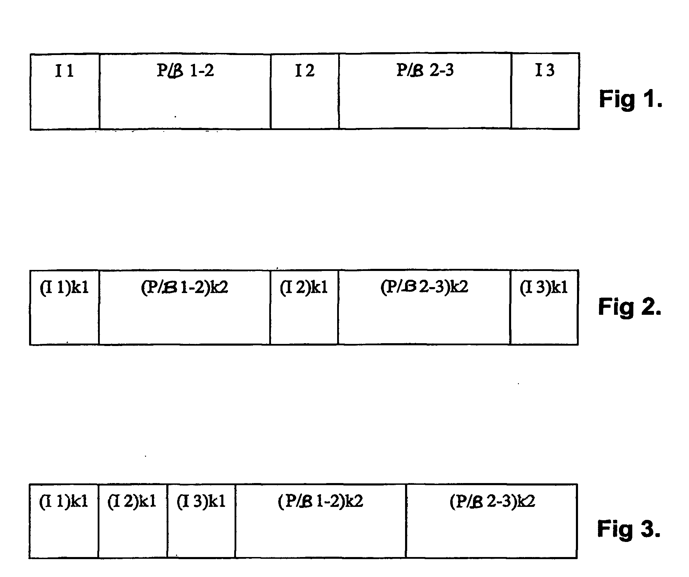

Sur la figure 1, le flux compressé est représenté par une suite de trames de type complète (I) et d'informations différentielles (P/B). Selon cet exemple, une première trame complète I 1, est suivie des trames P/B 1-2 permettant de reconstituer les trames successives entre la trame complète I 1 à la trame I 2.

De la même manière, la trame complète I 2 est suivie des trames successives différentielles P/B 2-3 permettant d'arriver à la trame complète I 3.

Ce flux est ensuite encrypté sélectivement selon le type de trame tel qu'illustré à la figure 2. Sur cette figure, on a utilisé une première clé k1 d'une longueur de 2048 bits pour encrypter les trames complète I 1, I 2 et 1 3. Une seconde clé k2, par exemple de 128 bits, a été utilisée pour l'encryption des trames différentielles P/B 1-2 et P/B 2-3.

La longueur des clés k1 et k2 est donnée ici à titre indicatif et pourrait être de toute autre longueur.

Selon l'invention, la différence de qualité d'encryptage peut se faire au niveau des clés ou au niveau de l'algorithme utilisé. Ainsi, l'encryptage selon k1 représente par exemple un algorithme de type IDEA et l'encryptage selon la k2 représente un algorithme de type DES.

Lors de la diffusion de ce flux, les trames complètes sont envoyées en premier tel qu'illustré par la figure 3.

Cette particularité permet à l'unité réceptrice de débuter immédiatement le décryptage par les trames nécessitant un traitement long. Une fois ces trames décryptées, le traitement des trames différentielles peut se faire en temps réel du fait de l'exécution rapide du type d'algorithme choisi pour ces trames.

Selon une variante de l'invention, le niveau d'encryptage pour les trames complètes est différencier selon qu'il s'agit d'une première trame, telle que la trame I1, ou les trames suivantes (I2 et I3). En effet, pour bénéficier du signal décrypté et décompressé, il faut immédiatement traiter la première trame puis les trames de différences. C'est pourquoi, la première trame d'une série est encryptée avec un algorithme à décryption plus rapide que les trames complètes suivantes.

Cet algorithme peut être le même que pour les trames différentielles ou un autre algorithme.

## Revendications

1. Méthode d'encryption d'un flux vidéo compressé, comprenant des blocs de données indépendantes (I) et des blocs de données différentielles (P/B) **caractérisé en ce qu'**elle consiste à encrypter par un premier niveau d'encryption les blocs de données indépendantes (I) et par un second niveau d'encryption les blocs de données différentielles (P/B), chacun de ces blocs étant traités indépendamment.

2. Méthode d'encryption d'un flux vidéo compressé selon la revendication 1, **caractérisé en ce que** les blocs de données indépendantes (I) sont encryptés par un algorithme de haut niveau alors que les blocs de données différentielles (P/B), sont encryptés par un algorithme à décryption rapide.

3. Méthode selon la revendication 1, **caractérisé en ce que** les blocs de données indépendantes (I) sont encryptés par une ou des clés longues, alors que les blocs de données différentielles (P/B) sont encryptés par une ou des clés courtes.

4. Méthode selon l'une des revendications 1 à 3, **caractérisé en ce que**, lors de la transmission du signal compressé, les blocs de données indépendantes (I) sont groupés par série, la méthode consistant à encrypter le premier bloc de cette série selon un niveau d'encryptage différent des blocs indépendants suivants.

## Patentansprüche

1. Verfahren der Verschlüsselung eines komprimierten Videodatenstromes, der Blöcke unabhängiger Daten (I) und Blöcke differentieller Daten (P/B) umfasst, **dadurch gekennzeichnet, dass** es darin besteht, die Blöcke unabhängiger Daten (I) auf einem ersten Verschlüsselungsniveau zu verschlüsseln, aber die Blöcke differentieller Daten (P/B) auf einem zweiten Verschlüsselungsniveau, wobei jeder dieser Blöcke unabhängig verarbeitet wird.

2. Verfahren der Verschlüsselung eines komprimierten Videodatenstromes nach Anspruch 1, **dadurch gekennzeichnet, dass** die Blöcke unabhängiger Daten (I) mit einem Algorithmus hohen Niveaus, die Blöcke differentieller Daten (P/B) mit einem Algorithmus zur raschen Entschlüsselung verschlüsselt werden.

3. Verfahren nach Anspruch 1, **dadurch gekennzeichnet, dass** die Blöcke unabhängiger Daten (I) mit einem langen oder mit langen Schlüsseln verschlüsselt werden, während die Blöcke differentieller Daten (P/B) mit einem kurzen oder mit kurzen Schlüsseln verschlüsselt werden.

4. Verfahren nach einem der Ansprüche 1 bis 3, **dadurch gekennzeichnet, dass** bei Übermittlung des komprimierten Signals die Blöcke unabhängiger Daten (I) als eine Reihe gebündelt werden, wobei das Verfahren darin besteht, den ersten Block dieser Reihe auf einem Verschlüsselungsniveau zu verschlüsseln, das sich von dem der darauf folgenden Blöcke unabhängiger Daten unterscheidet.

## Claims

1. A method of encryption of a compressed video flux, comprising independent data blocks (I) and differential data blocks (P/B), **characterised in that** it consists in encrypting according to a first level of encryption the independent data blocks (I) and to a second level of encryption the differential data blocks (P/B), each block being processed independently.

2. A method of encryption of a compressed video flux according to Claim 1, **characterised in that** the independent data blocks (I) are encrypted by a high level algorithm, while the differential data blocks (P/B) are encrypted by a rapid decryption algorithm.

3. A method according to Claim 1, **characterised in that** the independent data blocks (I) are encrypted by one or several long keys, while the differential data blocks (P/B) are encrypted by one or several short keys.

4. A method according to one of the Claims 1 to 3, **characterised in that** during the transmission of the compressed signal the independent data blocks (I) are grouped by series, the method consisting in encrypting the first block of this series according to a different level of encryption than that of the following independent blocks.
